# EUROPEAN PATENT SPECIFICATION

(11) **EP 2 166 392 B1**
(45) Date of publication and mention of the grant of the patent: **24.01.2018**
(21) Application number: 09170986.5
(22) Date of filing: 22.09.2009
(51) Int. Cl.: G02B 6/44

(54) **Splice box in an underground vault**
Spleissgehäuse in einem unterirdischen Kabelschacht
Boitier à épissures dans une chambre souterraine

(30) Priority: 22.09.2008 NL 2002006
(43) Date of publication of application: 24.03.2010
(73) Proprietor: Attema B.V., 4203 NJ Gorinchem (NL)
(72) Inventor: de Hoog, Antonie, 4213 DE, DALEM (NL)
(74) Representative: EP&C

(56) References cited:
- DE-A1- 19 736 705
- DE-C1- 4 140 701
- FR-A- 2 747 867
- JP-A- 6 118 253
- US-A- 4 709 980
- US-A- 5 069 516
- US-A- 5 267 122
- US-A1- 2006 278 426

## Description

The invention relates to the area of underground cables, in particular to fibre optic cables. Underground cables have to be able to be branched off or connected to another cable at certain locations. In those cases where a cable comprises several wires, some or all of these wires in this case may be interrupted and connected to other wires or cables, which is known as splicing. An underground fibre optic cable may comprise multiple strands, just like an electricity cable. A multiple fibre optic cable consists of a bundle of optical fibres. With multiple fibre optic cables as well, some or all of the fibres of the one cable, often referred to as the feed cable, are interrupted and spliced to optical fibres of other cables, referred to as branch cables. In the event that not all wires or fibres are interrupted, the so-called feed cable also continues.

When fibre optic cables are separated and spliced, the protective cable sheath of the feed cable and the branch cable(s) is removed along a length of several decimetres in order to be able to better handle the individual optical fibres and optical fibre bundles, which are situated in the cable. After splicing, these optical fibres and this optical fibre bundle have to be protected against external influences, such as water, sand, mechanical load etc. To this end, the optical fibre(s) or optical fibre bundle(s) are put in the splice box. Such a splice box can be placed above ground or below ground. The present invention relates in particular to placement below ground. Other types of multiple cables, such as electricity cables, data cables, telephone cables etc., can be treated in a similar manner.

When work has to be carried out on an underground splice box, it is preferable to take the splice box temporarily out of the ground and to perform the work to be carried out, in particular the so-called splicing, in a protected environment, such as a vehicle. The feed and branch cables (that is to say the cables which are connected in the splice housing) have to have a sufficient degree of excess length to be able to reach the vehicle or other working location from the ground. After the work has been carried out, this excess length also has to be stored below ground. If this is done in a unstructured manner, there is a danger that the cables will become damaged during excavation work. Regulations therefore often specify that the splice box and the excess length have to remain with a certain distance, for example 15 cm, of the original cable route. This means that the work has to be carried out strictly in accordance with the regulations, resulting in high costs for the work. In some cases, the splice housing is put away together with the excess length in a protective holder, such as a so-called handhole or manhole, which is buried in the ground in its entirety. This may result in problems when there is a shortage of space.

According to the prior art, the splice box has to be watertight in order to protect the individual optical fibres against moisture. This also applies when the splice box is placed in a larger holder. This larger holder, such as a so-called handhole or manhole, is intentionally not watertight in order to prevent it from floating on the groundwater or any other kind of water situated below ground, which would result in the paving being forced up. Making the splice box watertight is an accurate and time-consuming procedure, which increases the costs associated with such splice boxes.

Laying a cable and fitting a splice box is carried out in two steps, which are usually performed by different people (crews). The first step is the laying of the cable. This is relatively simple work which is often carried out by semi-skilled or unskilled people. After the cables have been laid, with the cable ends to be spliced later near to one another, the hole in the ground is often filled in again and the cable ends are only dug up later when the actual splicing takes place. Connecting the wires/fibres to one another, also referred to as splicing, and sealing the splice box is carried out by a splicing crew. The splicing crew locates the cable ends, digs them up, strips the cable(s) or cable bundle(s), introduces the feed and branch cables into the splice box, fits the pull reliefs and seals, splices the optical fibres/wires and seals the splice box. The splice box and the excess length of cable are then put back into the ground or into the holder, if present.

Usually, it is a requirement that the cables and splice housings are situated at a depth of approximately 60 cm in order to prevent possible damage by excavation work. Locating the cable ends is thus a time-consuming and relatively expensive procedure. In many cases, location designations on a map and coordinates with respect to fixed reference points - for example the wall of a building - in the surroundings are used for this purpose. Often, the location is not precisely determined. Sometimes the surroundings change - for example the wall is moved or knocked down - in the interim, as a result of which the reference points are no longer correct.

When modifications or alterations are to be carried out on the cable network, the splice box often has to be dug up again at a much later stage. This again is often a matter of 'trial and error' in practice and is thus very time-consuming. Sometimes, detection elements are incorporated in the splice box or holder when it is first installed, which detection elements can be located with a detector. Since the detection elements are situated at great depth, usually approximately 60 cm, the detection elements and detectors used have to be sensitive, thus making them costly. Locating a splice box is therefore expensive and has, in addition, been found to be difficult.

The work which is carried out by the splicing crew calls for highly skilled staff. The splicing process furthermore requires a great degree of accuracy and thus takes a substantial amount of time, resulting in high costs.

It is generally an object of the present invention to provide means which simplify the work to such a degree that it can be carried out more quickly and/or more readily, and if possible by people who are less highly skilled, resulting in a cost reduction.

The present invention more specifically relates to an assembly comprising a holder for a cable, in particular a fibre optic cable, which holder can be buried in the ground, and a splice box in which two or more cable ends can be connected to one another, the holder having a lower side and top side, in which the splice box is delimited by a bottom side, a ceiling and a housing wall which extends between the bottom side and the ceiling, and in which the ceiling and the housing wall form an airtight and watertight unit.

Such an assembly of an underground holder, such as a manhole or handhole, containing a splice box is known. In the holder, an excess length of cable is stored. This cable may lie in the holder in a jumble, but in many cases is rolled up to form a roll-like shape, with the winding axis of the roll running horizontally. The splice boxes used in these cases may be of different types. One known type of splice box is substantially of egg-shaped construction comprising two shell halves. The feed cable enters through the one shell half and the branch cable through the other shell half, the ends are connected to one another, spliced, and the shell halves are placed against one another and sealed together. This type of splice box is horizontal with the longitudinal axis of the egg shape, that is to say the partial axis of the shell halves is in a substantially vertical plane.

Prior art splice boxes can be found in the documents US 5,069,516-A, DE 41 40 701-C1, US 2006/278426-A1 and EP1843182. With this type - see Fig. 1 of EP-1,843,182, Fig. 2 of US-5,069,516, Fig. 1 of DE-4,140,701 and Fig. 1 of US-2006/0278426 - the splice box substantially consists of two parts. The first part is a cylinder which is closed at one end, the other part consists of a baseplate with cable passages to which a facility for producing one or more splices is mounted. With this type of splice box, the baseplate is inserted in the open end of the cylinder and a carefully fitted seal between the baseplate and the head-end open cylinder end in each case provides a hermetic seal with this type. Furthermore, with this type of splice box and other prior-art splice boxes, a lot of attention is paid to sealing the cable passages. With this type of splice box, the internal space of the cylinder is thus carefully hermetically sealed with respect to the environment in order to ensure that the splice is protected against moisture, water and dirt. This known type of splice box is placed loosely in the ground or in an abovementioned holder, the longitudinal axis of the cylinder being horizontal. As the splice box is watertight, due to accurately fitted and checked seals, the splices are well protected against groundwater and other moisture which is present in the ground. The drawback of this construction is that fitting and checking the seals is time consuming and therefore results in additional costs.

It is an object of the present invention to improve the assembly according to the preamble of claim 1 in such a manner that the work to be carried out on the splice box is significantly reduced.

According to the invention, this object is achieved by providing an assembly according to claim 1.

Placing the splice box in the holder with the bottom side turned downwards, or if desired placing it in the ground separately and completely without a holder with the bottom side turned downwards, results in the so-called diving bell effect. With a diving bell, the vertical wall and the ceiling are completely closed, as a result of which, when the diving bell is placed in the water with the open bottom side pointing downwards, an air bubble remains in the diving bell which prevents water from entering the diving bell. The same phenomenon can also be used to prevent groundwater from entering the splice box. For this purpose, the splice box only has to be placed in the ground or in the holder with the bottom side turned downwards. In order to facilitate this, the holder is advantageously provided with a housing support designed to place the splice box in the holder in a vertical position with the bottom side turned downwards.

The diving bell principle according to the invention is also advantageous if the bottom side of the splice box is closed by means of seals, since the seals may start to leak. In this case, the diving bell principle still provides additional protection.

The splice box is situated in the top section of the holder. Thus, on the one hand, the splice box is readily accessible via a passage formed in the top side of the holder and, on the other hand, any groundwater which might enter the holder via the bottom end - the holder is partially or completely open at the bottom in order to prevent it from floating on the groundwater and thus being pushed up - reaches the splice box as late as possible.

A removable cover is provided at the top of the holder in order to provide access to the interior of the holder. The splice box is attached on that side of the cover which is turned to the inside of the holder in such a manner that the splice box can be removed at the same time as the cover. The result of this is that when the cover is removed, the splice box is also removed at the same time, so that this is readily available for carrying out work thereon.

According to a further embodiment of the invention, the splice box is open at the bottom end, at least partially open. Here, a drainage passage may be provided, for example, in order to allow condensation to escape from the interior of the splice box.

According to a further embodiment, the splice box has a cylinder-like housing wall. Thus, a splice box is produced which is able to withstand external loads well.

Advantageously, the housing wall and the ceiling of the splice box are formed as a single part, in particular as a single-part moulded piece. Thus, it can be ensured in a simple manner that the housing wall and the ceiling of the splice box together form an airtight and watertight unit.

According to a further embodiment of the invention, the assembly is buried in the ground. The top side of the holder is preferably underground at a depth of at least 30 cm, for example at least 50 cm.

According to a further embodiment, the assembly furthermore comprises an excess length of underground cable, in particular fibre optic cable, which excess length is accommodated in the holder and is preferably rolled up to substantially form a roll. The excess length of cable makes it possible to take the cable ends above ground and even to take them into a vehicle in order to carry out work on them, such as splicing the cable ends.

According to a further embodiment of the invention, the splice box furthermore comprises a bottom plate which is provided on the bottom side of the splice box. This bottom plate is practical in order to prevent sand from entering and also forms a base on which a frame for supporting the splices can be placed. In this case, it is advantageous if the bottom plate has one or more vertical drainage passages in order to drain away condensation and also to pass through cables.

The present invention will be explained in more detail with reference to the embodiments which are illustrated diagrammatically in the drawing, in which:
Fig. 1 diagrammatically shows a vertical cross-sectional view of an assembly of a holder and splice box according to the invention which is buried in the ground;
Fig. 2 shows a view according to Fig. 1, but with the top side of the holder uncovered;
Fig. 3 shows a vertical cross section of a further variant of a holder according to the invention;
Fig. 4 shows a horizontal cross section of another further variant of a holder according to the invention;
Fig. 5 shows a horizontal cross section of yet another variant of a holder according to the invention;
Fig. 6 shows a horizontal cross section of yet another variant of a holder according to the invention;
Fig. 7 shows a vertical cross-sectional view of a variant of a splice box and holder;
Fig. 8 shows a vertical cross-sectional view of yet another variant of a holder and splice box;
Fig. 9 shows a slab for use with a holder according to the invention, in which Fig. 9a shows the slab in the spread position, Fig. 9b shows a first intermediate position when the slab according to Fig. 9a is folded in;
and Fig. 9c shows a further intermediate position when the slab according to Fig. 9a is folded in;
Fig. 10 shows a perspective view of a variant of a slab;
Fig. 11 shows a perspective view of a splice box of an assembly according to the invention.

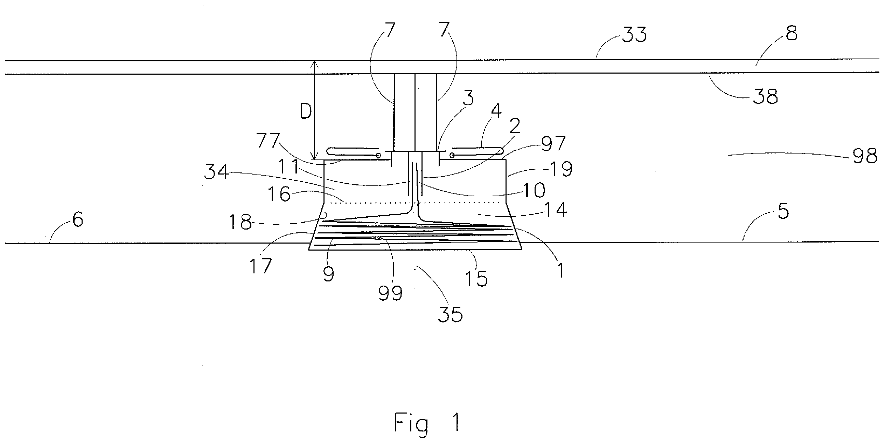

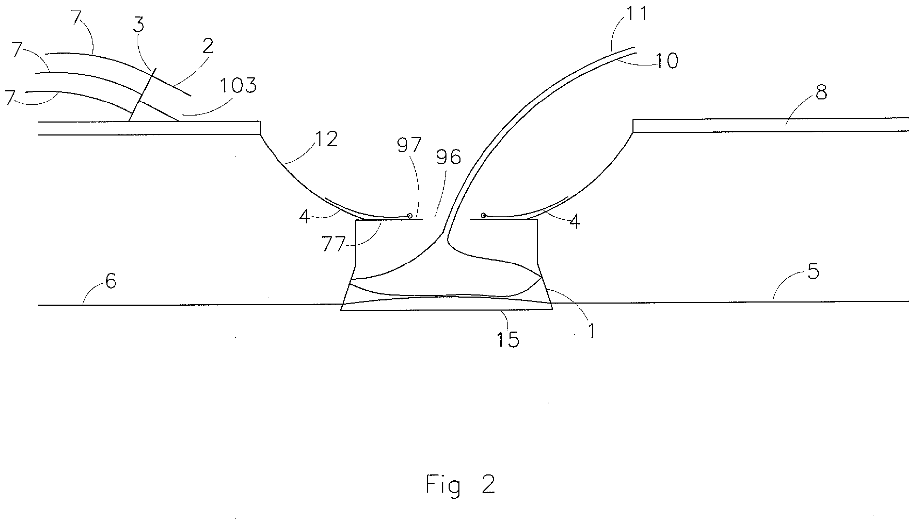

Figs. 1 and 2 show five aspects of this disclosure, which aspects can also be applied completely separately from one another or in any desired combination with one another. These aspects are:
- first aspect: the widening of the holding space in the holder from the top to the bottom;
- second aspect: the marking device designed as a resilient stem;
- third aspect: the slab for covering the area surrounding the access opening of a holder;
- fourth aspect: placing and designing the splice box in accordance with the so-called diving bell principle;
- fifth aspect: arranging the splice box at the top of the holder.

Figs. 1 and 2 show, in vertical cross-sectional view, a holder 1 buried in the ground 98 for the underground storage of an excess length 9 of underground cable 5, 6. The cables 5, 6 are in this case in particular fibre optic cables, but this may also be different kinds of cables, such as copper telephone cable, electricity cable, coaxial cable, etc.

The top side of the holder is situated underground, in particular at a depth of at least 25 cm, such as at approximately 25 cm, 30 cm, 40 cm or 50 cm. If paving is present, the top side of the holder will preferably be situated at least 25 cm below the paving in connection with an advantageous pressure distribution of the traffic and the like which presses on the paving. The deeper the holder is under the ground, the more advantageous this is for the load thereon. In practice, the cables are usually situated at 60 cm. However, in some cases, the bottom side of the holder has to be situated at a depth of approximately 150 cm. With a holder which is approximately 50 cm high, the top side of the holder will then be at a depth of approximately 100 cm.

The holder 1 has a holding space 14 which is delimited by a lower side 15, a top side - which is indicated by means of a dashed line 16 - and a holder wall 17 which extends between the lower side and top side. The holder wall 17 has an internal surface 18 which is turned towards the holding space 14. As can be seen in Figs. 1 and 2 and viewed in the direction from the top side 16 of the holder to the lower side 15 of the holder, the holding space 14 widens at the bottom of the holding space until it reaches the lower side of the holder 1. The internal surface 18 of the holder wall 17 tapers. As can be seen in Fig. 1, above the holding space 14 a further space 34 having a (tapering) widening internal surface 18 may be present which is surrounded by a vertical wall 19.

The holding space 14 which widens towards the bottom has the advantage that an excess length of cable can easily be stored therein. The excess length 9 can be rolled up about a winding axis 35 to form a roll 99. The holding space 14 which widens towards the bottom in this case ensures that the excess length 9 which has been rolled up to form a roll 99 stays at the bottom of the holder. With sufficient resilience of the cable 5, 6 counteracting the rolling up, the excess length 9 rolled up to form a roll 99 will come to bear against the internal surface 18 which widens towards the bottom, which will result in a downwardly directed reaction force pushing the cable down.

As can be seen in Fig. 1, the cable ends 10, 11 of the cables 5 and 6 may thereafter stick up from the roll or be deflected otherwise in order to, for example, connect them to one another, also referred to as splicing.

Incidentally, the internal surface of the holder wall does not have to widen, for example taper, along the entire circumference of the holder. It suffices if the internal surface only widens, for example tapers, along a section of the circumference while the internal surface may be vertical or slightly widened along the remainder of the circumference. It is, however, preferred if the internal surface of the holder wall widens, for example tapers, at the opposite sides of the holder.

So far the explanation of the first aspect of this disclosure, as illustrated in Figs. 1 and 2.

In order to prevent the holder 1 from floating on, for example, groundwater and being pushed up, the lower side 15 of the holder 1 is usually completely open or partially open and usually at a higher level in the holder 1, a passage is formed to allow air to escape from the holder. In order to prevent sand from falling into the holder from above, the top side 97 of the holder 1 is provided with a holder ceiling 77. In this holder ceiling 77, an access opening 96 is provided in order to allow access to the interior of the holder 1 and thus to be able to reach the cable ends 10, 11 and excess length 9 of cable. This access opening 96 is closed with a cover 3.

As can be seen in Fig. 1, the holder 1 is placed at a distance D below the surface 33 of the ground 98. Due to regulations, this distance D is usually approximately 60 cm in the Netherlands, but this distance can also be greater or smaller. In this instance, the ground 98 is covered by paving 8. Here, the upper surface of the ground 98 then corresponds to the upper surface of the paving 8. However, it will be clear that the paving 8 may also be omitted.

In practice, it has to be possible to trace the holder 1 below ground in order to be able to carry out work. In practice, tracing the holder 1 has proved to be time consuming. In many cases, locations are drawn on maps which subsequently turn out not to be sufficiently accurate. It is also customary to position reference signs in the surrounding area for the purpose of finding the holder, but this is not a very accurate method either. Furthermore, it is known to provide the holder with a detectable detection element, such as for example a piece of iron, which can then be traced by means of a metal detector. In view of the great depth D involved and the cables which are already present in the ground, however, this method requires highly sensitive detection means. Tracing a detection element is thus difficult and not reliable. When working on the basis of maps or reference signs in the surrounding area, this usually results in the digger coming close to the holder, but it is not until nothing has been found after reaching a depth of approximately 60 cm that the digger realizes that he has been digging at the wrong location.

According to the second aspect of this disclosure, an object which is buried in the ground - such as a holder 1, a buried cable, a gas, water or sewerage pipe - can readily be traced by providing the object with a marking device comprising at least one resilient stem 7 which extends between the bottom end and the top end of the marking device up to the top end of this marking device. The top end of the marking device is in this case below the upper surface 33 of the ground 98. Thus, the marking device does not protrude above ground and can not be an inconvenience there either. If paving 8 is present, there is an additional advantage in that the marking device does not interrupt the paving 8. If there is paving, the stem will, according to the invention, be situated between 0 and 10 cm below the paving. At a thickness of the paving of approximately 10 cm, this means that the stem will, in practice, be 0 cm to 20 cm below the surface.

The use of one or more resilient stems has the advantage that the marking device will not be damaged easily if it comes into contact with excavating machines. The stems can easily be pushed aside. This is very advantageous, for example, when one is looking for the location of the holder and does not know exactly where it is. Then, one will scratch the top layer of the ground in order to determine whether one or more stems are present there. Furthermore, since the stems are resilient, they will tend to automatically right themselves and to protrude from the object. This is practical when filling the hole in the ground above the holder with earth. A further advantage of the fact that the stems are resilient is that they can easily be pushed over during paving should they protrude too much from the ground. Thus, the stems do not have to be shortened.

In order to increase the traceability in the case of multiple stems, it is advantageous according to the invention if the stems are placed a distance of 25 to 100 cm apart, such as for example 90 cm apart, on either side of a cover 3.

In order to simplify detection of the underground holder by means of a detector, a detection element can be provided at the top end of a stem 7. In the case of several stems 7, each stem 7, a number of the stems 7 or only one single stem 7 may in this case be provided with such a detection element. Since the detection element, such as a piece of metal, a transmitter, etc., is at a small depth, it can be of a smaller or less powerful design, which is therefore less expensive.

According to the invention, the resilient stem extends in particular up to and with the top end of the marking device, although a detection element may still be provided on top thereof. Although not strictly necessary, it is furthermore preferred if the resilient stem extends as far as the vicinity of the bottom end of the marking device and is possibly even directly attached to the object. If the marking device has to be attached to an underground cable or another kind of elongate underground object, this may be carried out in a simple manner, for example, by means of a so-called tie wrap. In the case of a holder 1 as illustrated in Figs. 1 and 2, the marking device will usually be attached to the top side of the holder 1, for example to the cover 3 thereof. However, the marking device can also be attached to the top side of the ceiling 77 of the holder 1 and the marking device 7 can also be attached to the side wall 19, 17 of the holder 1.

The term stem is understood to mean an elongate body which remains upright when it is held straight at the bottom end. Elongate means long and narrow/thin with respect to its length.

So far the explanation of the second aspect of this disclosure. It will be clear that this second aspect can also be applied in combination with the first aspect, but may also equally well be used separately from the first aspect. The second aspect can even be used with objects other than holders.

Referring to Figs. 1 and 2, it can furthermore be seen that a slab 4 (third aspect of this disclosure) is provided at the top side of the holder 1. The slab 4 is provided around the access opening 96 which can be closed by means of the cover 3. In Fig. 1, the slab 4 is in a folded-in position, in which the slab 4 is in this case entirely on the top side of the holder. The cover 3 remains free, so that the stems 7 provided on the cover 3 are not impeded by the slab 4. When using a slab 4, it is thus advantageous to provide the stems 7 of the second aspect of this disclosure on the cover 3.

If, as is illustrated in Fig. 2, the top side 97 of the holder 1 has been uncovered in order to allow access to the interior of the holder 1, there will be a risk upon removal of the cover 96 of sand, rubble or other material from the ground rolling down the slope of the pit 12 or ending up at the access opening 96 in another way and falling into the holder 1. In order to prevent this, it is advantageous according to the invention to use the slab assembly 4. The slab assembly 4 covers the area surrounding the access opening 96, thus making it possible to achieve a much cleaner working environment. It will be clear that it is additionally advantageous if the slab assembly has dimensions which are such that, in the position illustrated in Fig. 2, it can extend beyond the top edges of the pit, that is to say up to the paving 8.

The slab assembly 4 may be permanently attached to the top side 97 of the holder 1, as illustrated in Fig. 1. However, it is also very possible, and also advantageous in connection with the durability and reliability of the slab assembly, to design the slab assembly as a separate component which is fitted to the top side of the holder or arranged there in another manner after the top side of the holder has been uncovered and only then to remove the cover 3. After the work has been finished and the cover 3 has been replaced, the slab assembly 4 can be removed again before the pit is filled in again.

It should be noted that the slab, in the folded-in position shown in Fig. 1, may be covered by a protective cover (not shown) in order to protect the slab assembly against scoops and the like. It is also possible to provide the slab assembly in the holder and to subsequently remove it from the holder after the holder cover 3 has been removed.

So far the explanation of the third aspect of this disclosure as illustrated with reference to Figs. 1 and 2. It will be clear that the third aspect of this disclosure can be used separately from the first and second aspects or in combination with the first aspect or in combination with the second aspect or in combination with first and second aspects.

Before explaining the fourth aspect of this disclosure, it can be noted that Fig. 2 also shows that the work on the cable ends 10 and 11 is preferably carried out above ground. To this end, the excess length 9 of cable 5, 6, as stored in the holder 1, has to offer sufficient margin, meaning length.

Figs. 1 and 2 furthermore show the fourth aspect of this disclosure, which is based on the so-called diving bell principle. A diving bell is a chamber which, in its original application in the field of diving, is usually bell-shaped. This chamber is open at the bottom and completely closed on the sides and at the top. When this chamber, diving bell, is dropped into the water with its open bottom side facing downwards, then the bubble of air present in the chamber will prevent water from entering. This principle can also be used for a splice case. A splice case is a housing in which one or more splices - connections between cables or wire portions thereof - are accommodated and which serves to protect these splices from the environment. According to the prior art, when a splice case is placed underground, it has to be completely sealed in order to prevent water, in particular groundwater, from entering. Completely sealing the splice box in this way necessitates various kinds of seals which have to be applied very accurately, which is labour-intensive and expensive. The fourth aspect of this disclosure is based on the view that, when the diving bell principle is used, the splice box can be open at the bottom, provided that the side walls and the ceiling are completely closed.

As a result of the bubble of gas which is present in the splice box, rising groundwater will then not be able to penetrate the splice box. Thus, the splices can be kept free from water.

In the embodiment according to Figs. 1 and 2, the splice box comprises a cylinder which is open at the bottom at 103 and closed at the top by the cover 3. If the cover 3 has been placed in the access opening 96 (Fig. 1), a cylindrical space is thus created which is only open at the bottom. Via the open bottom side, the wire ends 10, 11 of the cables 5 and 6 can then be introduced and be spliced to one another via means which are not shown.

According to the invention, the splice box 2 is attached to the cover 3. However, as far as it concerns other aspects of this disclosure, the splice box 3 can also be suspended from the ceiling 77, be attached to the side wall 19 or even be placed in the holder loosely. If desired, the splice box 2 can also be at the bottom of the holder 1. What is important is that the at least partly open bottom side 103 of the splice box is turned downward.

So far the explanation of the fourth aspect of this disclosure with reference to Figs. 1 and 2. It will be clear that this fourth aspect of this disclosure can be applied completely separately from the other aspects or in combination with the first aspect or in combination with the second aspect or in combination with the third aspect or in combination with the first and second aspect or in combination with the first and third aspect or in combination with the first, second and third aspects.

Finally. Fig. 1 also illustrates the fifth aspect of this disclosure.

According to the fifth aspect of this disclosure, the splice box is provided in the top section of the holder 1. This has the advantage that, after the access opening 96 has been opened, the splice box 2 is readily accessible. Preferably, the splice box 2 is in this case above the excess length of cable stored in the holder 1, which excess length is in addition advantageously rolled up to form a roll 99. This offers the advantage that the splice box 2 is not only readily accessible, but also readily removable from the holder 1 without a jumble of cables having to be cleared away first. According to the fifth aspect, it is furthermore advantageous to attach the splice box to the cover 3, so that this is removed simultaneously with the cover 3. However, it is also possible to place the splice box 2 in the holder on the ceiling. A further general advantage of placing the splice box 2 in the top section of the holder is that water which may enter the holder 1 via the lower side will not so easily be able to reach the splice box 2.

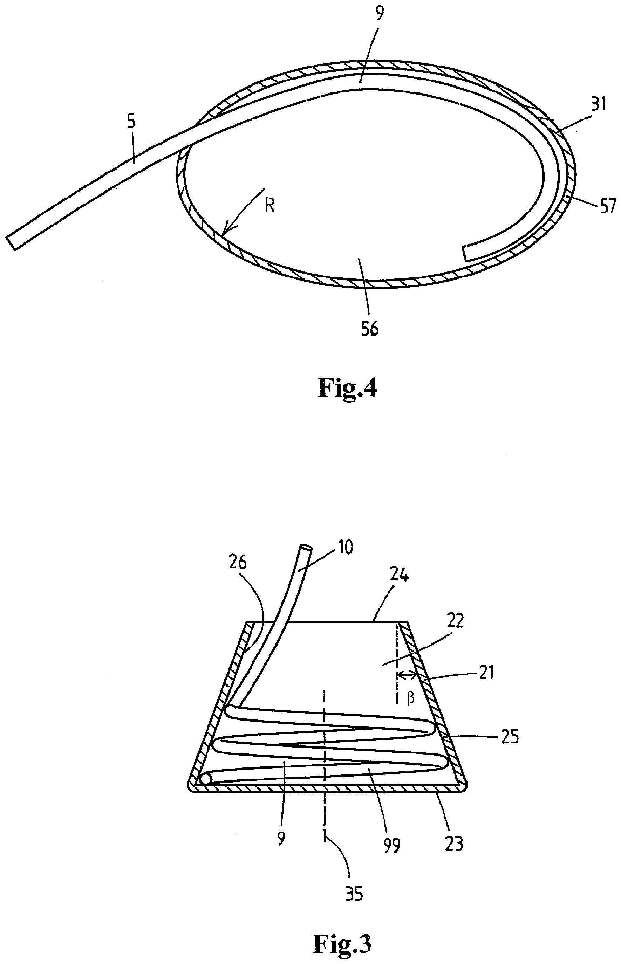

The first aspect of this disclosure is explained in slightly more detail below with reference to Figs. 3, 4, 5 and 6.

Fig. 3 shows a holder 21 according to the first aspect of this disclosure, the top side 24 of which is open. However, in use, this top side 24 will usually be closed by means of a cover. Fig. 3 clearly shows that the excess length 9 is rolled up to form a roll 99 around the vertical axis. Furthermore, it can clearly be seen that the holder wall 25, which surrounds the holding space 22 in the vertical plane, has an internal surface 26 which is turned towards the interior of the holding space 22 and extends conically at an angle β. In practice, this angle β will be at least 15 degrees and, with a view to the accessibility of the cable, preferably at most 45°, more preferably at most 30°. As a result of the resilience of the cable 9, the latter will automatically come to lie against the internal surface 26 of the holder wall 25 along the circumference of the roll 99. Due to the fact that this internal surface 26 tapers, the roll 99 will automatically remain at the bottom of the holder 21. The cable end 10 can readily be pulled out via the top side 24 of the holder, after which the excess length will follow. Conversely, the holder end 10 can also readily be replaced in the holder by winding the excess length to form a roll 99.

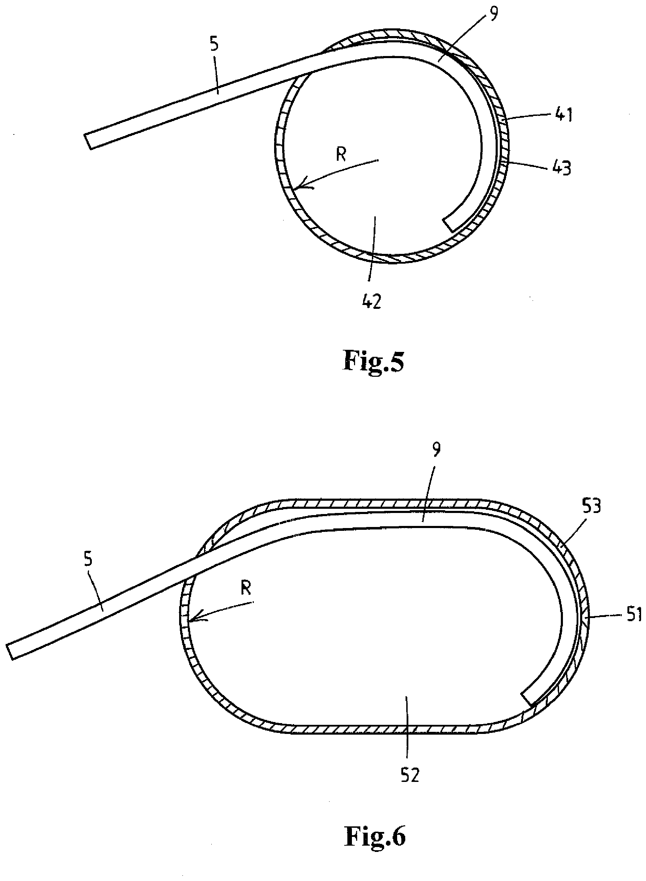

As is illustrated in the horizontal cross-sectional view from Fig. 5, the holding space 42 may have a round shape, viewed in horizontal cross section. The holder wall 43 of the holder 41 will then have a cone-shaped configuration, at least on the inside.

Referring to Figs. 4 and 6, the holder wall 57, 53 of the holder 31 and 51, respectively, viewed in horizontal cross section, preferably has an elongate shape, such as the elliptical shape from Fig. 4 or the oval shape from Fig. 6. This makes it possible for the length of one winding to be relatively large, while the width of the holder is relatively small, viewed in the horizontal direction transversely to the cable route. In this connection, it is noted that regulations usually require structures which are buried in the ground to project by no more than 15 cm on either side of the cable route. Incidentally, the taper of the holder walls 53 and 57 may be similar to angle β from Fig. 3 in order to widen the holding spaces 52 and 56 in the downward direction.

Figs. 4, 5 and 6 also show the radius of curvature of the bends of the ring-like shape by means of the arrow R. In connection with the curvature which is to be imposed on the cable, this radius of curvature is preferably at least 7 cm at each bend and more preferably at least 10 cm. In the embodiment of Figs. 5 and 6, the radius of curvature will preferably be at most 20 cm, more preferably at most 15 cm, due to the available installation space on either side of a cable. With the embodiment according to Figs. 4, 5 and 6, the radius of curvature R is approximately 15 cm.

With an elongate holder, such as the elliptical holder from Fig. 4 or the oval holder from Fig. 6, the internal surface may be widened to a lesser degree at the smallest width of the elongate holder - with a conical embodiment, the angle β may here be for example 0° or between 0° and 10° - than at the greatest width of the elongate holder - with a conical embodiment, the angle β may here be for example 30°.

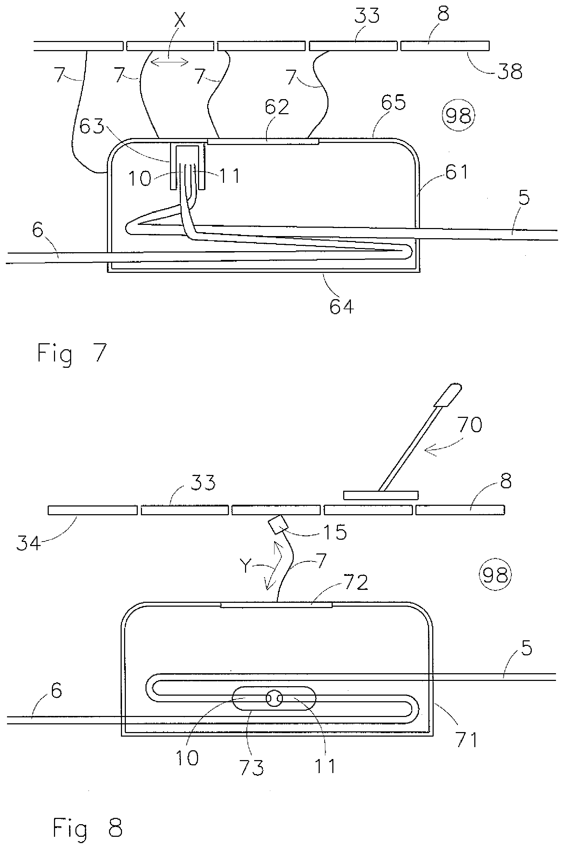

Figs. 7 and 8 illustrate the second aspect of this disclosure (the marking device) in slightly more detail.

Fig. 7 shows an underground buried holder 61, which differs from holder 1 in that the downwardly widening holding space is absent. Holder 61 has a lower side 64, which will usually be partly open, and a ceiling 65 with a cover 62 therein which closes off an access opening. On the bottom side, a splice box 63 of the diving bell principle is fitted on the ceiling 65. In this case, there is no slab. Four stems 7 are provided here, but this may be significantly fewer or, on the contrary, significantly more. The ground 98 is covered above the holder 61 by a paving 8 having an upper surface 33 which also forms the upper surface of the ground 98, and a lower surface 38. It can be seen that the stems 7 are pushed down as a result of the paving 8 and thus have a twisted configuration. This is an important advantage of the resilient stems 7.

Referring to Fig. 8, the holder 71 with cover 72 is substantially similar to the holder 61 and cover 62 from Fig. 7. In the embodiment from Fig. 8, a different type of splice case 73 has been used by way of example, which splice case is not in accordance with the diving bell principle. Furthermore, in the embodiment from Fig. 8, a stem 7 is used which is provided with a detection element 15 at the top end. In the embodiment from Fig. 8, it is also possible to provide more stems 7 which may optionally be provided with a detection element. The detection element 15 offers the advantage that the location of the holder 71 can be determined without having to dig up the paving 8 by means of a detection apparatus 70, for example a metal detector if the detection element 15 is made of metal.
Figs. 7 and 8 furthermore illustrate the degree of flexibility of the stems 7. Assuming that the bottom end of a stem 7 is secured and the stem is completely upright in the neutral position, the flexibility will be such that the top end of the stem can be displaced across a horizontal distance X, which distance X is at least 20% of the length Y of the stem. Such a degree of flexibility ensures that the top end thereof can bend when it comes into contact with an excavator, thus preventing the stem from becoming damaged. Furthermore, such flexibility makes it possible for the stem to bend laterally without breaking in order to be able to bend sufficiently in order to be put underground if the stem is too long in the straight position - and would protrude above ground. Thus, the stem can readily be used under, for example, paving without having to shorten the stem. Preferably, the flexibility is such that the distance X is at least 35%. The stem is then less susceptible to damage and can then be bent sideways even more readily.

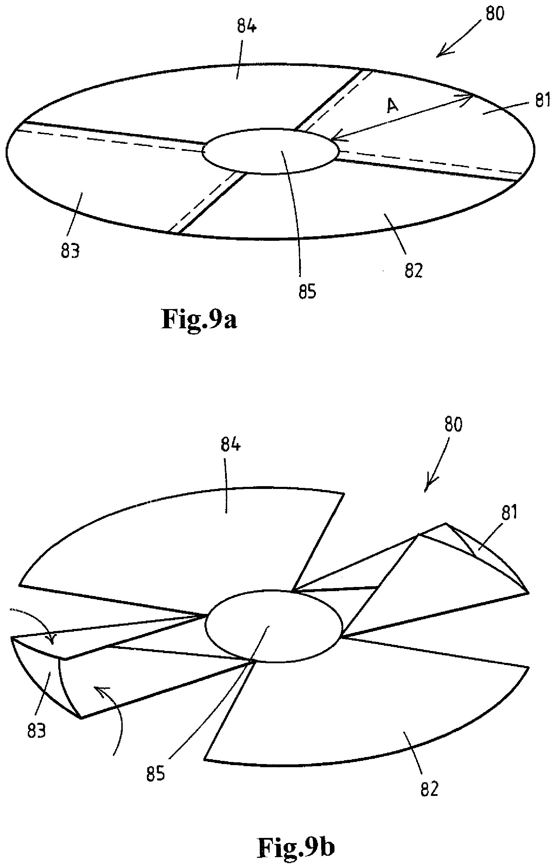

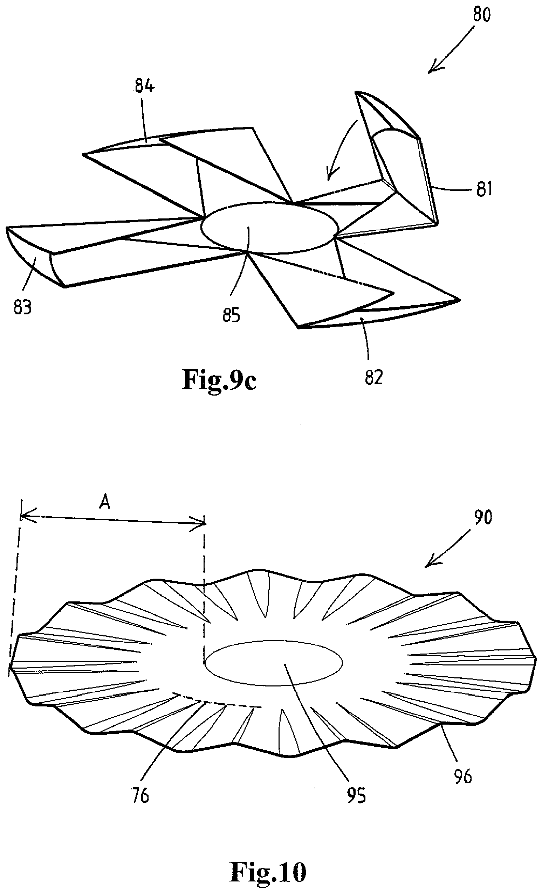

Referring to Fig. 9 and Fig. 10, the third aspect of this disclosure, the slab, will be explained in slightly more detail by means of two embodiments.

Fig. 9 shows a slab assembly 80 which is composed of four slab portions 81, 82, 83 and 84. These slab portions 81, 82, 83 and 84 surround a round passage 85 which is to have dimensions which are equal to or greater than the access opening of the holder with which they are used. Thus, the slab assembly 80 can be placed around an access opening.

When the slab assembly 80 illustrated in Fig. 9a is in the completely folded-out position, the slab portions 81, 82, 83 and 84 overlap one another at the edges which adjoin one another in the tangential direction.

In order to fold the slab assembly 80 into the folded-in position, each slab part 81-84 can initially be folded as is indicated in Fig. 9b for the slab portions 81 and 83. Subsequently, each slab portion, such as illustrated in Fig. 9c for slab portion 81, can be folded in two along a substantially tangential folding line. Thus, a relatively compact slab is obtained which may be situated in its entirety above the top side 97 of a holder, as is illustrated in Fig. 1.

Fig. 10 shows another slab assembly 90 which is composed of a single slab portion which extends continuously in the circumferential direction around the central passage 95. The central passage 95 is similar to the central passage 85 in the embodiment from Fig. 9. The slab assembly 90 can be folded in due to the fact that folding pleats 96 are provided which extend in particular on the outer half of the single-part slab portion. These folding pleats 96 make it possible to fold the slab assembly 90 in two, as it were, along the partially indicated circular folding line 76.

Both slab assembly 80 and slab assembly 90 extend along a distance A of at least 100 cm, such as 130 cm to 180 cm. In practice, it is expected that a distance A of approximately 150 cm will suffice. It will furthermore be clear that the slab assembly 80, 90 can also be of a different shape than the round shape illustrated in Figs. 9 and 10. The slab assembly may also have an oval or rectangular shape.

The slab assembly 80, 90 may according to the invention be made from any suitable flexible material, for example a plastic material, geotextile, or another flexible material.

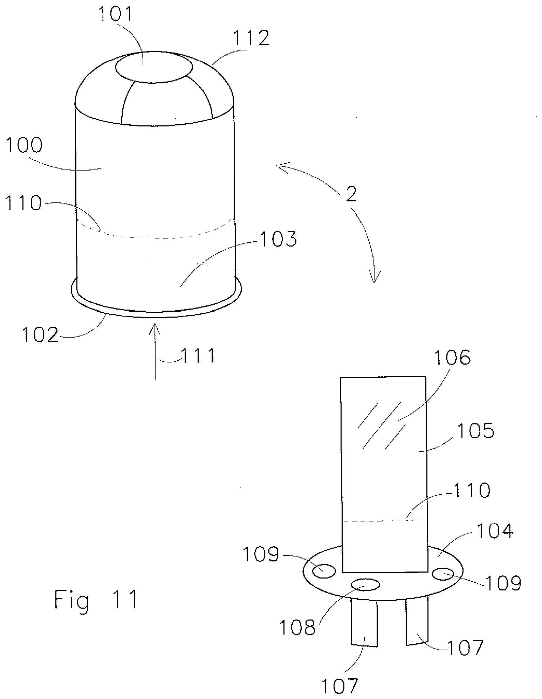

The fourth aspect, the diving bell principle, will be explained in slightly more detail below by means of an example and with reference to Fig. 11.

Fig. 11 shows a splice box 2. The housing part thereof, which produces the bell principle, is delimited by a bottom side 102, a ceiling 101 and a housing wall 100 extending between the bottom side and the ceiling 101. The housing wall 100 and the ceiling 101 are produced as a single-part moulded product, for example by injection-moulding from plastic or by casting from metal. The housing wall 100 and the ceiling 101 are completely closed and may be a solid part. The housing wall 100 is illustrated here as being cylindrical, but it can also be square, rectangular or of a different shape. On the bottom side 102, the housing wall 100 delimits a completely open passage 103. The bottom side 102 does not have to be completely open, but may also be partially open.

The splice box 2 according to Fig. 11 furthermore comprises a bottom plate 104 which can be inserted into the bottom side 102 of the cylindrical space which is surrounded by the housing wall 100. This bottom plate 104 supports a frame 105 on which features 106 for producing one or more splices of cables, in particular fibre optic cables, are provided. The bottom plate 104 is provided with cable guides 107 which are attached to the bottom plate 104 via mouths 108. Furthermore, the bottom plate 104 is provided with one or more additional passages 109. The bottom plate 104 can be inserted into the housing part 112 in accordance with arrow 111 without special locking measures. The cable guides 107 and cable passages 108 do not have to be sealed and can therefore be large in size, so that the cables are more or less loosely passed through them. The additional passages 109 are optional. The advantage of these additional passages 109 is inter alia that they can carry away any condensation which may have formed in the housing part 112.

When the bottom plate 104 with the frame 105 (and the splices provided thereon) is inserted in the housing part 112 and the entire splice box 2 is placed vertically, with the bottom side 102 facing downwards, into a tank of water, some water will penetrate into the splice box until the gas pressure in the splice box is equal to the water pressure. In Fig. 11, the level of the water penetrating into the splice box is indicated by dashed line 110 on the housing part 112 and dashed line 110 on the frame 105. As can be seen, this level is considerably lower than the splicing features.

Fig. 11 thus illustrates that the splice box constructed in accordance with the diving bell principle may, according to the invention, be closed at the bottom side by a bottom plate or another means. However, no additional measures are required in order to ensure a hermetic seal through which no moisture can penetrate. It is conceivable as such to nevertheless fit such seals. However, even if such seals are fitted, the splice box according to the invention, by virtue of the diving bell principle, still has the advantage that even when these seals fail the ingress of water is prevented due to the diving bell principle if the bottom end 102, with seals which may or may not fail, is turned downwards.

## Claims

1. Assembly comprising a holder (1, 61) for a fibre optic cable (5, 6), which holder is be buried in the ground, and a splice box (2, 63) in which two or more cable ends (10, 11) can be connected to one another,
in which the holder (1, 61) has a lower side (15, 64) and top side (97, 65);
in which the splice box (2, 63) is delimited by a bottom side (102), a ceiling (101) and a housing wall (100) which extends between the bottom side and the ceiling (101);
in which a removable cover (3, 62) is provided in the top side (97, 65) of the holder (1, 61) for providing access to the interior of the holder;
wherein the ceiling (101) and the housing wall (100) form a chamber which is airtight and watertight at the sides and from above;
wherein the splice box (2, 63) is accommodated in the holder (1, 61) with the bottom side (102) turned downwards;
wherein the splice box (2) is attached on that side of the cover (3) which is turned towards the interior of the holder, so that the splice box (2) can be removed from the holder at the same time as the cover (3); and
wherein the top side of the cover (3) is situated underground.

2. Assembly according to claim 1, in which the splice box (2, 63) is open, or at least partially open, at the bottom side (102).

3. Assembly according to one of the preceding claims, in which the splice box (102) has a cylinder-like housing wall (100).

4. Assembly according to one of the preceding claims, in which the housing wall (100) and the ceiling (101) of the splice box (2, 63) are made as a single piece, in particular as a single-part moulded product.

5. Assembly according to one of the preceding claims, in which the splice box (2, 63) is provided in the top section of the holder (1, 61).

6. Assembly according to one of the preceding claims, in which the holder is completely or partially open on the bottom side.

7. Assembly according to one of the preceding claims, in which the assembly is buried in the ground (98).

8. Assembly according to claim 7, in which the top side (97, 65) of the holder is situated underground at a depth (D) of at least 25 cm, for example 50 cm.

9. Assembly according to one of the preceding claims, furthermore comprising an excess length (9) of an underground cable (5, 6), in particular a fibre optic cable, this excess length being accommodated in the holder (1, 61) and preferably rolled up to substantially form a roll (99).

10. Assembly according to one of the preceding claims, in which the splice box (2) furthermore comprises a bottom plate (104), which is provided on the bottom side (102) of the splice box (2).

11. Assembly according to claim 10, in which the bottom plate (104) has one or more passages (108, 109) which are water-permeable in the vertical direction.

12. Use of a splice box (2, 63) for accommodating a connection of cable ends, in which the splice box is delimited by a bottom side (102), a ceiling (101) and a housing wall (100) extending between the bottom side and the ceiling (101), in which the ceiling and the housing wall form an airtight and watertight unit, in which the cable ends are inserted into the splice box via the bottom side (102), and in which the splice box is placed underground with the bottom side turned downwards;
in which the splice box is placed in a holding space of a holder which is buried in the ground; in which a removable cover is provided in the top side of the holder for providing access to the interior of the holder, and in which the splice box is attached on that side of the cover which is turned towards the interior of the holder, so that the splice box can be removed from the holder at the same time as the cover; and
in which the top side of the cover is situated underground.

13. Use according to claim 12, in which the splice box is surrounded externally by ground material which touches the splice box.

## Patentansprüche

1. Baugruppe mit einer Halterung (1, 61) für ein Glasfaserkabel (5, 6), wobei die Halterung im Boden vergraben ist, und mit einer Spleißbox (2, 63), in der zwei oder mehr Kabelenden (10, 11) miteinander verbunden werden können,
in welcher die Halterung (1, 61) eine untere Seite (15, 64) und eine obere Seite (97, 65) hat;
in welcher die Spleißbox (2, 63) durch eine Unterseite (102), eine Oberseite (101) und eine Gehäusewand (100) begrenzt ist, die sich zwischen der Unterseite und der Oberseite (101) erstreckt;
in welcher in der Oberseite (97, 65) der Halterung (1, 61) eine abnehmbare Abdeckung (3, 62) vorgesehen ist, um Zugang zum Inneren der Halterung zu schaffen;
wobei die Oberseite (101) und die Gehäusewand (100) eine Kammer bilden, die an den Seiten und von oben luftdicht und wasserdicht ist; wobei die Spleißbox (2, 63), mit der Unterseite (102) nach unten gerichtet, in der Halterung (1, 61) aufgenommen ist;
wobei die Spleißbox (2) auf derjenigen Seite der Abdeckung (3) angebracht ist, die dem Inneren der Halterung zugewandt ist, so dass die Spleißbox (2) zur gleichen Zeit wie die Abdeckung (3) von der Halterung abgenommen werden kann; und
wobei die Oberseite der Abdeckung (3) unterirdisch angeordnet ist.

2. Baugruppe nach Anspruch 1, bei der die Spleißbox (2, 63) an der Unterseite (102) offen oder zumindest teilweise offen ist.

3. Baugruppe nach einem der vorhergehenden Ansprüche, bei der die Spleißbox (102) eine zylinderähnliche Gehäusewand (100) aufweist.

4. Baugruppe nach einem der vorhergehenden Ansprüche, bei der die Gehäusewand (100) und die Oberseite (101) der Spleißbox (2, 63) in einem Stück gefertigt sind, insbesondere als einstückiges Gussteil.

5. Baugruppe nach einem der vorhergehenden Ansprüche, bei der die Spleißbox (2, 63) im oberen Abschnitt der Halterung (1, 61) vorgesehen ist.

6. Baugruppe nach einem der vorhergehenden Ansprüche, bei der die Halterung an der Unterseite ganz oder teilweise offen ist.

7. Baugruppe nach einem der vorhergehenden Ansprüche, bei der die Baugruppe im Erdreich (98) vergraben ist.

8. Baugruppe nach Anspruch 7, bei der die Oberseite (97, 65) der Halterung in einer Tiefe (D) von mindestens 25 cm, beispielsweise 50 cm, unterirdisch angeordnet ist.

9. Baugruppe nach einem der vorhergehenden Ansprüche, weiterhin umfassend eine Überlänge (9) eines unterirdischen Kabels (5, 6), insbesondere eines Lichtwellenleiterkabels, wobei diese Überlänge in der Halterung (1, 61) untergebracht ist und vorzugsweise aufgerollt ist, um im Wesentlichen eine Rolle (99) zu bilden.

10. Baugruppe nach einem der vorhergehenden Ansprüche, bei der die Spleißbox (2) ferner eine Bodenplatte (104) aufweist, die an der Unterseite (102) der Spleißbox (2) vorgesehen ist.

11. Baugruppe nach Anspruch 10, bei der die Bodenplatte (104) einen oder mehrere Kanäle (108, 109) aufweist, die in vertikaler Richtung wasserdurchlässig sind.

12. Verwendung einer Spleißbox (2, 63) zur Aufnahme einer Verbindung von Kabelenden, in welcher die Spleißbox durch eine Unterseite (102), eine Oberseite (101) und eine Gehäusewand (100) begrenzt ist, die sich zwischen der Unterseite und der Oberseite (101) erstreckt; in welcher die Oberseite (101) und die Gehäusewand (100) eine luftdichte und wasserdichte Einheit bilden, in welcher die Kabelenden über die Unterseite (102) in die Spleißbox eingeführt sind, und in welcher die Spleißbox mit nach unten gerichteter Unterseite unterirdisch angeordnet ist;
in welcher die Spleißbox in einem Aufnahmeraum einer im Boden vergrabenen Halterung angeordnet ist;
in welcher eine abnehmbare Abdeckung in der Oberseite der Halterung vorgesehen ist, um Zugang zum Inneren der Halterung zu schaffen, und in welcher die Spleißbox auf derjenigen Seite der Abdeckung angebracht ist, die zum Inneren der Halterung hin gerichtet ist, so dass die Spleißbox (2) zur gleichen Zeit wie die Abdeckung (3) von der Halterung abgenommen werden kann; und
in welcher die Oberseite der Abdeckung unterirdisch angeordnet ist.

13. Verwendung nach Anspruch 12, bei der die Spleißbox außen von Erdmaterial umgeben ist, welches die Spleißbox berührt.

## Revendications

1. Ensemble comprenant un support (1, 61) pour un câble à fibres optiques (5, 6), lequel support peut être enterré dans le sol, et un boîtier à épissures (2, 63) dans lequel deux ou plus extrémités de câble (10, 11) peuvent être connectées l'une à l'autre,
dans lequel le support (1, 61) a un côté inférieur (15, 64) et un côté supérieur (97, 65);
dans lequel le boîtier à épissures (2, 63) est délimité par un côté inférieur (102), un plafond (101) et une paroi de logement (100) qui s'étend entre le côté inférieur et le plafond (101);
dans lequel un couvercle amovible (3, 62) est pourvu dans le côté supérieur (97, 65) du support (1, 61) pour fournir un accès à l'intérieur du support ;
dans lequel le plafond (101) et la paroi de logement (100) forment une chambre qui est étanche à l'air et à l'eau sur les côtés et par le dessus;
dans lequel le boîtier à épissure (2, 63) est logé dans le support (1, 61) avec le côté inférieur (102) orienté vers le bas ;
dans lequel le boîtier à épissures (2) est attaché au côté du couvercle (3) qui est orienté vers l'intérieur du support de sorte que le boîtier à épissures (2) peut être retiré du support en même temps que le couvercle (3) ; et
dans lequel le côté supérieur du couvercle (3) est situé sous terre.

2. Ensemble selon la revendication 1, dans lequel la boîte à épissures (2, 63) est ouverte, ou au moins partiellement ouverte, sur le côté inférieur (102).

3. Ensemble selon l'une des revendications précédentes, dans lequel la boîte à épissures (102) présente une paroi de logement (100) en forme de cylindre.

4. Ensemble selon l'une des revendications précédentes, dans lequel la paroi de logement (100) et le plafond (101) du boitier à épissures (2, 63) sont réalisés en seule pièce, en particulier en tant que produit moulé en une seule pièce.

5. Ensemble selon l'une des revendications précédentes, dans lequel la boîte à épissures (2, 63) est pourvue dans la section supérieure du support (1, 61).

6. Ensemble selon l'une des revendications précédentes, dans lequel le support est complètement ou partiellement ouvert sur le côté inférieur.

7. Ensemble selon l'une des revendications précédentes, dans lequel l'ensemble est enterré dans le sol (98).

8. Ensemble selon la revendication 7, dans lequel le côté supérieur (97, 65) du support est situé sous terre à une profondeur (D) d'au moins 25 cm, par exemple de 50 cm.

9. Ensemble selon l'une des revendications précédentes, comprenant en outre une longueur excédentaire (9) d'un câble souterrain (5, 6), en particulier un câble à fibres optiques, cette longueur excédentaire étant logée dans le support (1, 61) et de préférence enroulée jusqu'à former sensiblement un rouleau (99).

10. Ensemble selon l'une des revendications précédentes, dans lequel le boîtier à épissures (2) comprend en outre une plaque inférieure (104), qui est pourvue sur le côté inférieur (102) de la boîte à épissures (2).

11. Ensemble selon la revendication 10, dans lequel la plaque inférieure (104) comporte un ou plusieurs passages (108, 109) qui sont perméables à l'eau dans la direction verticale.

12. Utilisation d'une boîte à épissures (2, 63) pour recevoir une connexion d'extrémités de câble, dans laquelle la boîte à épissures est délimitée par un côté inférieur (102), un plafond (101) et une paroi de boîtier (100) qui s'étend entre le côté inférieur et le plafond (101), dans lequel le plafond et la paroi du boîtier forment une unité étanche à l'air et à l'eau, dans laquelle les extrémités de câble sont insérées dans la boîte à épissures par le côté inférieur (102) et dans laquelle la boîte à épissures est placée sous terre avec le côté inférieur tourné vers le bas ;
dans laquelle la boîte à épissures est placée dans un espace de maintien d'un support qui est enterré dans le sol ;
dans laquelle un couvercle amovible est pourvu sur le côté supérieur du support pour fournir un accès à l'intérieur du support, et dans laquelle le boîtier à épissures (2) est attaché au côté du couvercle qui est orienté vers l'intérieur du support de sorte que le boîtier à épissures (2) peut être retiré du support en même temps que le couvercle ; et
dans lequel le côté supérieur du couvercle est situé sous terre.

13. Utilisation selon la revendication 12, dans laquelle le boîtier à épissures est extérieurement entouré d'un matériau de sol qui touche la boîte à épissures.
